# DEMANDE DE BREVET EUROPEEN

(11) **EP 3 996 226 A1**
(43) Date de publication de la demande: **11.05.2022**
(21) Numéro de dépôt: 21206616.1
(22) Date de dépôt: 05.11.2021
(51) Int. Cl.: H02J 3/00, H02J 13/00, G05B 15/02

(54) **PROCÉDÉS ET SYSTÈMES DE CONFIGURATION AUTOMATIQUE D'UN MICRO-RÉSEAU ÉLECTRIQUE**

(30) Priorité: 06.11.2020 FR 2011419
(71) Demandeur: Schneider Electric Industries SAS, 92500 Rueil-Malmaison (FR)
(72) Inventeur: MEURANT, Olivier, 38400 SAINT MARTIN D'HERES (FR); AUBERT, Florent, 38920 CROLLES (FR); WILD, Jean, 38500 COUBLEVIE (FR)
(74) Mandataire: Lavoix

(57) **Abrégé**

Un procédé de configuration automatique d'un micro-réseau de distribution d'électricité comporte :
- acquérir (S100) de données techniques décrivant des propriétés du micro-réseau, notamment une topologie du micro-réseau et des propriétés d'au moins une partie des équipements électriques connectés au micro-réseau, au moyen d'un outil logiciel de configuration implémenté par un serveur informatique distant ;
- générer (S102) automatiquement un ensemble de fonctions logicielles exécutables permettant de piloter automatiquement les équipements du micro-réseau, en tenant compte des propriétés du micro-réseau acquises par l'outil de configuration ; et
- installer (S104) automatiquement les fonctions logicielles générées sur un contrôleur électronique appartenant à un système de commande du micro-réseau, ce contrôleur étant connecté auxdits équipements par l'intermédiaire d'une liaison de communications.

## Description

La présente description concerne le domaine des réseaux de distribution d'électricité, et se rapporte plus particulièrement aux micro-réseaux (« microgrids » en langue anglaise).

Les micro-réseaux sont généralement utilisés dans des bâtiments résidentiels, commerciaux ou industriels, voire dans des groupes de bâtiments, pour produire et stocker localement de l'électricité, tout en pouvant par ailleurs être reliés à un réseau public de distribution d'électricité.

Les micro-réseaux facilitent l'utilisation de sources d'énergie distribuée, et plus particulièrement l'utilisation de sources d'énergie renouvelable, telles que des éoliennes, des hydroliennes ou des panneaux photovoltaïques. Les micro-réseaux peuvent également comporter des dispositifs de stockage d'énergie, tels que des batteries, et peuvent aussi accommoder des charges électriques dynamiques et réversibles, telles que des véhicules automobiles électriques connectés à une borne de recharge. Les micro-réseaux peuvent avantageusement être utilisés pour assurer une alimentation en électricité stable et continue lorsque le réseau public n'est pas assez fiable.

Typiquement, un système de commande permet de piloter et d'automatiser le fonctionnement du micro-réseau, par exemple pour connecter ou déconnecter des charges et/ou des sources d'alimentation électrique, par exemple en réponse à l'apparition d'un défaut électrique, ou en fonction de l'évolution de la demande en énergie et/ou en fonction de la disponibilité des sources d'alimentation, ou encore lorsque le micro-réseau se trouve déconnecté du réseau principal.

Ce pilotage peut être effectué grâce à un dispositif de contrôle comprenant un contrôleur programmable (PLC, pour « programmable logic controller » en anglais) ou encore un ordinateur personnel industriel (IPC, pour « industrial personal computer »), interfacé au sein du micro-réseau avec différents éléments, tels que des appareils de protection ou des appareils de commutation, avec des sources d'alimentation et des charges électriques, cet interfaçage pouvant par exemple être réalisé au moyen d'un réseau de communication tel qu'un bus de données industriel.

Un inconvénient est que de tels micro-réseaux sont complexes à installer et à paramétrer. Par exemple, il faut prévoir des réglages de plusieurs paramètres additionnels pour chaque appareil de protection, ainsi que le calcul de plans de protection spécifiques, ce qui demande aux installateurs et aux bureaux d'études en charge de l'installation et de la maintenance beaucoup plus de temps et requiert des compétences beaucoup plus poussées ou inhabituelles que pour mettre en service des installations de distribution classiques. Cela tient notamment à la nature hautement décentralisée des micro-réseaux, et au fait que certains éléments peuvent être connectés ou déconnectés de façon dynamique. Il n'est donc pas toujours possible de configurer un micro-réseau sur la base d'un plan d'installation générique et statique, comme on pourrait le faire avec des réseaux traditionnels.

Cette complexité peut être un obstacle au déploiement de nouveau micro-réseaux.

De plus, une installation configurée par du personnel insuffisamment qualifié peut conduire à des dysfonctionnements, voire à de graves problèmes de sécurité.

Il existe donc un besoin pour des procédés et des systèmes permettant de configurer rapidement et simplement un micro-réseau de distribution d'électricité.

A cet effet, selon un aspect de l'invention, un procédé de configuration automatique d'un micro-réseau de distribution d'électricité comporte :
- acquérir des données techniques décrivant des propriétés du micro-réseau, notamment une topologie du micro-réseau et des propriétés d'au moins une partie des équipements électriques connectés au micro-réseau, au moyen d'un outil logiciel de configuration implémenté par un serveur informatique distant ;
- générer automatiquement un ensemble de fonctions logicielles exécutables permettant de piloter automatiquement les équipements du micro-réseau, en tenant compte des propriétés du micro-réseau acquises par l'outil de configuration ;
- installer automatiquement les fonctions logicielles générées sur un contrôleur électronique appartenant à un système de commande du micro-réseau, ce contrôleur étant connecté auxdits équipements par l'intermédiaire d'une liaison de communications.

Selon des aspects avantageux mais non obligatoires, un tel procédé peut incorporer une ou plusieurs des caractéristiques suivantes, prises isolément ou suivant toute combinaison techniquement admissible :
- les fonctions logicielles générées sont configurées pour, lorsqu'exécutées par le contrôleur, assurer la stabilité du micro-réseau en fréquence et en tension, notamment lorsque le micro-réseau fonctionne en mode isolé.
- les fonctions logicielles générées sont configurées pour, lorsqu'exécutées par le contrôleur, piloter des appareils de protection électrique installés dans le micro-réseau.
- les fonctions logicielles générées sont configurées pour, lorsqu'exécutées par le contrôleur, gérer automatiquement les séquences d'opérations à mettre en œuvre pour passer d'un mode isolé, dans lequel le micro-réseau est déconnecté d'un réseau de distribution d'électricité, et un mode connecté, dans lequel le micro-réseau est connecté à un réseau de distribution d'électricité.
- le procédé comporte en outre une étape de génération automatique d'un deuxième ensemble d'algorithmes qui permettent d'optimiser la consommation du micro-réseau lorsque le micro-réseau est connecté à un réseau de distribution d'électricité.
- le procédé comporte en outre une étape de création automatique d'une interface homme machine à partir des données acquises.
- le procédé comporte en outre une génération automatique de paramètres de configuration de la liaison de communication à partir des données acquises.
- les équipements électriques connectés au micro-réseau comportent un ou plusieurs charges électriques réversibles, et/ou un ou plusieurs dispositifs de stockage d'énergie et/ou un ou plusieurs dispositifs de production d'énergie renouvelable.
- le contrôleur électronique est un automate industriel programmable ou un ordinateur personnel industriel.

Selon un autre aspect, un système de configuration automatique d'un micro-réseau de distribution d'électricité, comporte :
- un outil logiciel de configuration implémenté par un serveur informatique distant ;
- un système de commande d'un micro-réseau, comportant un contrôleur électronique connecté à des équipements électriques du micro-réseau par l'intermédiaire d'une liaison de communications ;
et dans lequel le système de configuration est programmé pour :
- acquérir des données techniques décrivant des propriétés du micro-réseau, notamment une topologie du micro-réseau et des propriétés d'au moins une partie des équipements électriques connectés au micro-réseau, au moyen d'un outil logiciel de configuration implémenté par un serveur informatique distant ;
- générer automatiquement un ensemble de fonctions logicielles exécutables permettant de piloter automatiquement les équipements du micro-réseau, en tenant compte des propriétés du micro-réseau acquises par l'outil de configuration ;
- installer automatiquement les fonctions logicielles générées sur un contrôleur électronique appartenant à un système de commande du micro-réseau, ce contrôleur étant connecté auxdits équipements par l'intermédiaire d'une liaison de communications.

L'invention sera mieux comprise et d'autres avantages de celle-ci apparaîtront plus clairement à la lumière de la description qui va suivre d'un mode de réalisation d'un tel procédé donnée uniquement à titre d'exemple et faite en référence aux dessins annexés, dans lesquels :
[Fig 1] la figure 1 est une représentation schématique d'un exemple d'un micro-réseau de distribution électrique ;
[Fig 2] la figure 2 est un diagramme d'un procédé de configuration automatique d'un micro-réseau selon un mode de réalisation ;
[Fig 3] la figure 3 est un schéma synoptique d'une implémentation du procédé de configuration automatique de la figure 2 ;
[Fig 4] la figure 4 est une représentation schématique d'un exemple d'une interface graphique générée par le procédé de configuration automatique de la figure 2.

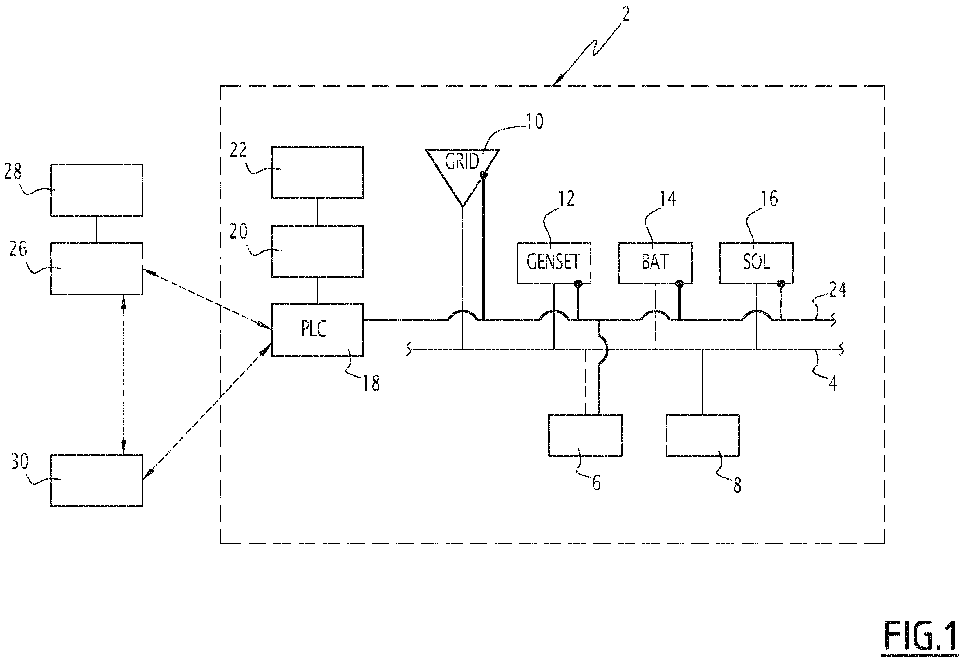

Un exemple d'un micro-réseau de distribution d'électricité est illustré sur la figure 1.

Dans de nombreux modes de réalisation, le micro-réseau 2 est une installation de distribution d'électricité, comprenant des conducteurs électriques 4 qui permettent de connecter des charges électriques 6, 8 et des sources d'énergie électrique locales.

Par exemple, les charges électriques 6, 8 et les sources d'énergie électrique comportent des entrées et/ou des sorties de puissance électrique qui sont raccordées à un ou à plusieurs des conducteurs électriques 4, de préférence par l'intermédiaire d'interfaces de connexion comprenant un ou plusieurs appareils électriques de commutation et/ou un ou plusieurs appareils de protection électrique.

Selon divers modes de réalisation, le micro-réseau 2 peut être utilisé pour distribuer des courants électriques continus, ou des courants électriques alternatifs. Selon les cas, les courants électriques distribués peuvent être monophasés ou polyphasés.

Dans de nombreux cas, les charges 6, 8 peuvent être classées en deux catégories : un premier groupe correspondant à des charges électriques dynamiques voire réversibles, qui peuvent être pilotées pouvant être déconnectées sur demande, par exemple à la demande du micro-réseau 2, et un deuxième groupe correspondant à des charges électriques ne pouvant pas être déconnectées à la demande et/ou devant rester alimentées en permanence par le micro-réseau 2.

Par exemple, les charges électriques 6 pouvant être déconnectées sont des charges électriques réversibles, c'est-à-dire des charges électriques qui peuvent alternativement consommer de l'électricité fournie par le micro-réseau 2 et renvoyer de l'électricité sur le micro-réseau. C'est par exemple le cas des véhicules électriques rechargeables connectés à une borne de recharge alimentée par le micro-réseau 2.

Toutefois, cette distinction peut être omise dans certains modes de réalisation. Le micro-réseau 2 pourrait, en variante, comporter des charges électriques d'un seul des deux types présentés ci-dessus.

Dans de nombreux modes de réalisation, le micro-réseau 2 peut être connecté à un réseau 10 de distribution d'électricité (noté « GRID » sur la figure 1, et nommé « réseau principal » dans ce qui suit) pouvant être un réseau public.

De préférence, le micro-réseau 2 peut être sélectivement connecté au réseau 10 ou déconnecté du réseau 10, par exemple au moyen d'appareils de commutation électrique pilotables à distance.

Le micro-réseau peut alors fonctionner suivant différents modes de fonctionnement selon qu'il est connecté au réseau 10 ou déconnecté du réseau 10. On peut, par exemple, définir un mode de fonctionnement connecté et un mode de fonctionnement déconnecté, pouvant chacun comporter des routines de fonctionnement et des stratégies de pilotage différentes.

Selon un exemple, le micro-réseau 2 est configuré pour, lorsqu'il est déconnecté du réseau 10, permettre l'alimentation des charges électriques 6 et 8 à partir de l'énergie électrique produite par les sources locales.

Dans de nombreux modes de réalisation, les sources d'énergie connectées au micro-réseau 2 sont aptes à générer de l'électricité, ou à restituer de l'énergie électrique stockée, ou à convertir de l'énergie électrique à partir d'une autre source d'énergie, et peuvent être actives de façon continue ou par intermittence selon leur nature. En pratique, ces sources d'énergie électrique permettent une production d'électricité décentralisée.

Dans l'exemple illustré, qui est donné avant tout à des fins d'explication et qui n'a pas vocation à limiter la demande à ce seul mode de réalisation, le micro-réseau 2 comporte un générateur classique 12 (noté « GENSET » sur la figure 1), un dispositif de stockage d'énergie 14 (noté « STOR ») et une source d'énergie renouvelable 16 (noté « SOL »).

Le générateur classique 12 peut, par exemple, être un groupe électrogène, ou un générateur comportant une turbine à gaz, ou une pile à combustible.

Le dispositif de stockage 14 peut comporter une batterie, par exemple une batterie d'accumulateurs électrochimiques, et/ou d'autres moyens de stockage d'électricité, tels que des batteries de super-condensateurs, ou des dispositifs de stockage d'énergie cinétique, tels que des volants tournants (« flywheel » en anglais) ou encore des dispositifs de stockage à hydrogene.

La source d'énergie renouvelable 16 peut, par exemple, comporter un panneau solaire, ce panneau solaire pouvant être associé à un onduleur ou à tout équipement de conversion électrique approprié.

En variante, les sources d'énergie pourraient inclure d'autres moyens de génération d'électricité basés sur des énergies dites renouvelables, tels que des aérogénérateurs éoliens, ou des chaudières à biomasse, ou des générateurs alimentés par géothermie, ou des turbines hydrauliques, ou tout moyen approprié.

On conçoit aisément qu'en pratique, le nombre et la nature des sources électriques du micro-réseau 2 pourraient être différentes de celles ici décrites, tant par leur nature que par leur nombre ou leur agencement dans le micro-réseau 2.

Dans de nombreuses implémentations, en fonction des circonstances, le micro-réseau 2 peut être piloté pour qu'au moins une partie de l'énergie électrique produite par les sources locales soit transmise vers le réseau 10.

Lorsque nécessaire, le micro-réseau 2 peut aussi être piloté pour que de l'énergie électrique en provenance du réseau 10 soit utilisée pour alimenter tout ou partie des charges électriques 6, 8, par exemple lorsque la production d'électricité au sein du micro-réseau 2 par les sources locales est insuffisante pour répondre à la demande locale.

Dans de nombreux modes de réalisation, le micro-réseau 2 comprend également des appareils électriques permettant de gérer et réguler la puissance électrique circulant dans le micro-réseau 2, tels que des appareils de protection électrique, et/ou des appareils de commutation, et/ou des convertisseurs de puissance.

Le micro-réseau 2 peut également comporter des capteurs et/ou des appareils de mesure configurés pour mesurer des grandeurs électriques (tensions électriques, intensités, puissances électriques actives et réactives, etc.) ou des grandeurs environnementales (température, humidité, etc.).

Ces appareils de commutation, de même que les charges et les sources électriques, peuvent être pilotés pour assurer la stabilité (en fréquence et/ou en tension) du micro-réseau 2. Par exemple, en fonction de conditions de fonctionnement mesurées et/ou de politiques de fonctionnement imposées, des consignes peuvent être envoyées aux équipements, par exemple pour faire varier la puissance électrique consommée ou la puissance électrique produite, ou pour faire varier une puissance électrique réactive.

En outre, le micro-réseau 2 peut être configuré pour détecter l'apparition d'un défaut électrique et, en réponse, déconnecter tout ou partie des sources d'alimentation électrique et/ou des charges électriques afin de protéger l'installation et/ou pour permettre d'isoler le défaut et/ou de localiser l'origine du défaut.

De manière générale, pour assurer tout ou partie des fonctions de pilotage présentées ci-dessus, le micro-réseau 12 comporte un système de commande comprenant au moins un contrôleur électronique 18, tel qu'un automate industriel programmable (en anglais, « programmable logic controller », ou PLC) ou encore un ordinateur personnel industriel.

Par exemple, le système de commande comporte aussi un terminal utilisateur 20 connecté au contrôleur 18 et comprenant une interface utilisateur 22.

Dans de nombreux modes de réalisation, le terminal utilisateur 20 est un ordinateur, tel qu'un ordinateur industriel ou une station de travail.

L'interface utilisateur 22 est par exemple capable d'afficher une interface graphique et peut comporter des instruments de saisie de données tels qu'un clavier, un pointeur, un écran tactile, une souris, ou tout élément équivalent.

L'interface utilisateur 22 peut également comporter un ou plusieurs dispositifs d'acquisition de données, tel qu'un lecteur de disque, ou un connecteur filaire, ou une interface de communication sans fil, permettant de télécharger des données depuis un autre appareil local, tel qu'un appareil mobile porté par l'opérateur.

Le dispositif de commande électronique (et plus particulièrement le contrôleur 18) est connecté à au moins une partie des équipements électriques du micro-réseau 2 par l'intermédiaire d'une liaison de communications 24.

La liaison de communications 24 peut comporter un réseau filaire, ou un bus de données, notamment un bus de données industriel, ou une pluralité de liaisons point à point, ou encore des liaisons sans fil.

Selon un exemple donné à des fins d'illustration, la liaison de communication 24 peut comporter un bus de données Modbus, d'autres alternatives pouvant toutefois être utilisées en variante.

En pratique, la liaison de communication 24 peut être utilisée par le contrôleur 18 pour envoyer des ordres visant à connecter ou déconnecter certains équipements du micro-réseau 2.

Par exemple, la liaison 24 est connectée à des appareils de commutation tels que des relais, et/ou des disjoncteurs, et/ou des commutateurs, et/ou des interrupteurs et/ou des sectionneurs, qui peuvent ainsi être activés à distance par le contrôleur 18 pour déconnecter ou reconnecter sélectivement un ou plusieurs équipements, par exemple pour déconnecter une charge électrique 6, ou pour déconnecter le micro-réseau 2 du réseau 10.

Dans de nombreux cas, certains de ces équipements (charges ou sources électriques) peuvent intégrer des moyens de commutation électrique pilotables par un contrôleur électronique embarqué. Dans ce cas, la liaison de communication 24 peut être raccordée à ces contrôleurs locaux et ainsi directement piloter les moyens de commutation électriques locaux sans forcément faire appel à un appareil de commutation qui serait placé à l'extérieur de cet équipement (i.e. à l'interface entre l'équipement et les conducteurs 4).

La liaison 24 peut aussi être utilisée pour transmettre vers le contrôleur 18 des données mesurées par des capteurs, ou des données générées par les équipements connectés et étant relatives à des grandeurs électriques mesurées et/ou des informations sur l'état interne d'équipements du micro-réseau 2.

Selon des modes de mise en oeuvre, le contrôleur 18 comporte un processeur, telle qu'un microcontrôleur programmable ou un microprocesseur, et une mémoire formant un support d'enregistrement de données lisible par ordinateur.

Par exemple, la mémoire est une mémoire à lecture seule (ROM), ou une mémoire vive (RAM), ou une mémoire non volatile de type EPROM, ou EEPROM, ou FLASH, ou NVRAM, ou équivalent, ou un support d'enregistrement optique ou magnétique, ou toute technologie appropriée.

La mémoire comporte ici des instructions exécutables ou des modules de code logiciel, qui sont de préférence conçus pour permettre au micro-réseau 2 de réaliser des opérations nécessaires à son fonctionnement, et notamment pour mettre en oeuvre des procédés tel que décrits dans les exemples qui suivent lorsque ces instructions sont exécutées par le processeur.

Dans de nombreux modes de réalisation, les instructions exécutables ou les modules de code logiciel sont compatibles avec la norme IEC 61131, partie 3.

L'emploi du terme « processeur » ne fait pas obstacle à ce que, en variante, au moins une partie des fonctions du contrôleur 18 soient réalisées par un processeur de traitement du signal (DSP), ou un composant logique reprogrammable (FPGA), ou un circuit intégré spécialisé (ASIC), ou tout élément équivalent.

Le dispositif de commande (et notamment le contrôleur 18) peut comporter une interface de communication permettant d'être en communication, par exemple au travers d'un réseau informatique tel qu'internet, avec un terminal informatique 26 distant, tel qu'un ordinateur, ou une station de travail, ou un dispositif de communication mobile tel qu'une tablette numérique, ou tout dispositif équivalent, ce terminal 26 pouvant être utilisé pour configurer le micro-réseau ou le superviser à distance.

Le terminal 26 peut comporter une interface utilisateur 28, par exemple analogue à l'interface utilisateur 22, en étant capable d'afficher une interface graphique et pouvant comporter des instruments de saisie de données et/ou d'acquisition de données.

Le dispositif de commande (et notamment le contrôleur 18), de même que le terminal 26, peuvent également être en communication avec un serveur informatique distant 30, là encore, par exemple, au travers d'un réseau informatique tel qu'internet.

Par exemple, le terminal 26 et le serveur 30 comportent chacun un ou plusieurs processeurs configurés pour mettre en oeuvre tout ou partie des étapes décrites ci-après.

L'utilisation du terme « serveur informatique » n'empêche pas que, dans certains modes de réalisation, les fonctionnalités correspondantes du serveur soient implémentées par un service logiciel hébergé sur une plate-forme de type « cloud computing ».

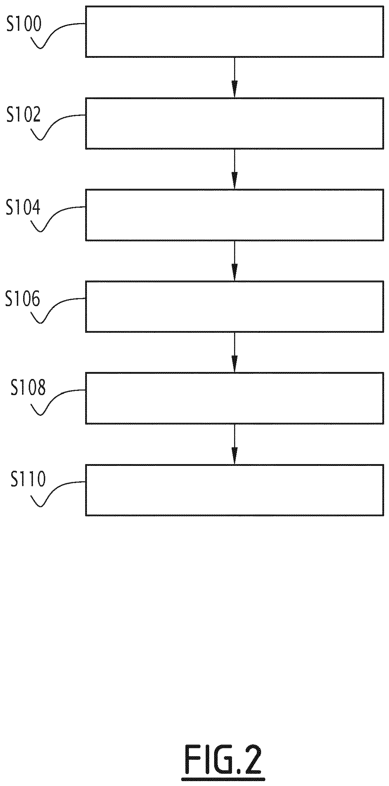

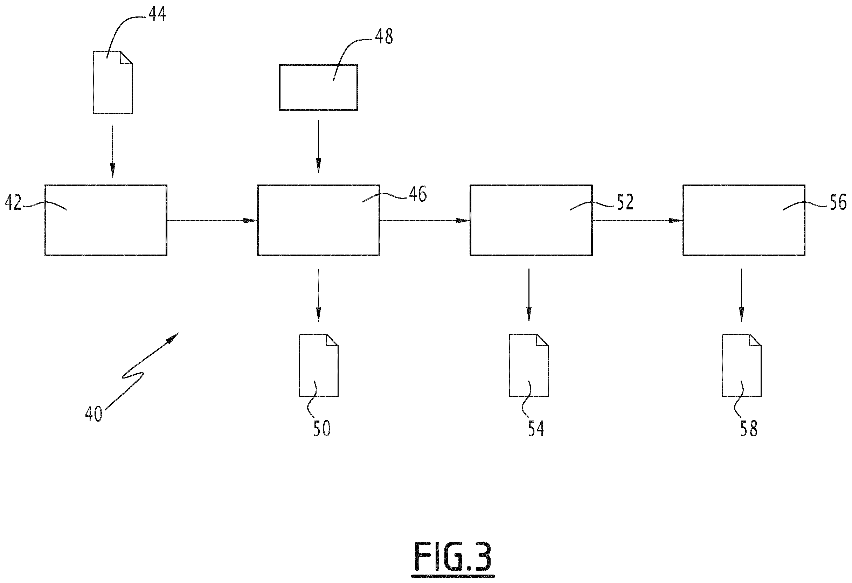

De aspects de l'invention se rapportent plus particulièrement à des procédés permettant de configurer automatiquement un micro-réseau tel que le micro-réseau 2, comme illustré par les figures 2 et 3.

Le procédé débute au bloc S100 par une étape d'acquisition de données techniques décrivant des propriétés du micro-réseau 2. Ces données techniques comportent par exemple une topologie de connexion du micro-réseau 2, des propriétés techniques d'au moins une partie des équipements (charges électriques ou sources électriques) connectés au micro-réseau 2, voire au moins un scénario d'utilisation (« use case » en anglais) du micro-réseau 2.

Par exemple, les données sont saisies ou fournies (par exemple sous la forme d'un fichier de configuration) par un opérateur, par exemple sur le terminal informatique 26, au moyen de l'interface 28.

Sur le schéma synoptique de la figure 3 représentant un exemple d'un système 40 de configuration du micro-réseau 2, un module d'acquisition 42 acquiert les données techniques 44 fournies par l'opérateur.

Par exemple, le module d'acquisition 42 est implémenté par du code logiciel exécuté par le serveur 30. En d'autres termes, l'étape d'acquisition est ici mise en œuvre par le serveur 30, ce dernier étant en communication avec le terminal 26.

Dans de nombreux modes de réalisation, les données sont saisies ou téléchargées par l'opérateur au moyen d'un outil logiciel de configuration. Cet outil de configuration peut comporter une interface web hébergée par le serveur 30 (ou par un autre serveur connecté au serveur 30) et être accessible depuis le terminal 26, par exemple au moyen d'un navigateur internet ou d'une application logicielle dédiée (ou tout autre moyen équivalent) fonctionnant sur le terminal 26.

En variante, toutefois, dans certaines implémentations, l'étape d'acquisition pourrait être directement réalisée par le terminal 26 grâce à un outil de configuration installé localement (le module d'acquisition 42 étant alors implémenté par le terminal 26).

Dans de nombreux modes de réalisation, les données techniques acquises lors de l'étape S100 peuvent comporter un ou plusieurs des paramètres techniques suivants relatifs à l'architecture du micro-réseau 2 :
- la topologie électrique du micro-réseau 2 ;
- des niveaux de tension électrique nominales (par exemple, l'amplitude maximale ou la valeur effective) attendus lorsque le micro-réseau est en fonctionnement ;
- une liste des appareils de commutation électrique et notamment des appareils de coupure tels que les contacteurs et les disjoncteurs, ainsi que leurs caractéristiques.

Les données techniques acquises lors de l'étape S100 peuvent comporter un ou plusieurs des paramètres techniques, listés ci-dessous, relatifs aux sources d'énergie connectées au micro-réseau 2, notamment aux sources d'énergie décentralisées 12, 14, 16 :
- le nombre de sources aptes à produire ou stocker ou plus généralement à fournir de l'électricité ;
- un identifiant de chaque sources électrique du micro-réseau 2 ;
- la puissance électrique nominale des sources électriques ;
- le niveau de charge minimale admissible et le niveau d'énergie disponible, dans le cas de dispositifs de stockage tels que des batteries ;
- le niveau de fonctionnement minimum, dans le cas d'un générateur tel qu'un groupe électrogène ;
- dans le cas d'une machine tournante (générateur, convertisseur, turbine, etc.), des paramètres mécaniques tels que la vitesse nominale de rotation, la fréquence, l'état d'usure des parties mobiles ;
- les caractéristiques nominales des panneaux solaires et/ou de cellules photovoltaïques, si applicable (courant, tenson électrique, etc.) ;
- une liste des charges électriques délestables, ainsi que le niveau de priorité de chaque charge électrique (indiquant, par exemple, si une charge électrique peut être délestée en priorité, ou si elle présente une importance telle qu'elle ne peut être délestée qu'en dernier recours).

Les données techniques acquises lors de l'étape S100 peuvent comporter des paramètres techniques relatifs aux liaisons de communication 24 du micro-réseau 2, tel que le type de liaison de communication, notamment le type de bus de données, ou la topologie du réseau utilisé, ainsi que des informations relatives au protocole de communication utilisé, et/ou à la nature des informations qui transitent ou peuvent transiter sur la liaison 24.

Conformément à de nombreux modes de réalisation, les paramètres acquis peuvent être fournis sous la forme d'un fichier de configuration ou d'une base de données, ou plus généralement par un support de stockage de données structuré tel qu'une base de données relationnelle, ou un fichier de données structuré, tel qu'un fichier XML (« Extensible Markup Language » en anglais) ou un fichier JSON (« Javascript Object Notation » en anglais), ou toute autre structure de données ou technologie appropriée.

Ensuite, au bloc S102, le procédé comporte une étape de création, à partir des données techniques acquises, d'un ensemble 50 d'algorithmes de pilotage correspondant à des fonctions exécutables par le contrôleur 18 pour piloter un ou plusieurs appareils ou équipements du micro-réseau 2.

Par ensemble d'algorithmes, on désigne ici une ou plusieurs fonctions ou méthodes logicielles exécutables qui sont aptes à être mises en œuvre par un processeur du contrôleur 18. Ces algorithmes sont, de préférence, générés sous forme d'instructions exécutables ou de code logiciel compilé.

Sur le schéma synoptique de la figure 3, un module 46 de génération d'algorithmes construit automatiquement l'ensemble d'algorithmes 50 à partir des données techniques acquises lors de l'étape S100 et à partir d'une bibliothèque 48 numérique de fonctions logicielles.

Par exemple, le module 46 de génération d'algorithmes est implémenté par du code logiciel exécuté par le serveur 30. En d'autres termes, l'étape d'acquisition est ici mise en œuvre par le serveur 30. Cependant, dans les variantes où l'étape S100 est mise en œuvre par le terminal 26, alors l'étape S102 peut également être mise en œuvre par le terminal 26, du moment que ce dernier a accès à la bibliothèque 48.

Par exemple, la bibliothèque 48 est hébergée par le serveur 30. Son contenu n'est ainsi pas librement accessible à l'opérateur depuis le terminal 26 ni à l'utilisateur final sur le micro-réseau 2. La bibliothèque 48 peut ainsi contenir des fonctions propriétaires qui ne sont pas divulguées.

Cela permet de s'adapter aux particularités de chaque micro-réseau 2, car les réglages de ces appareils sont très dépendants de la nature et du type de charges électriques et de sources électriques présents dans l'installation et de la façon dont ces sources et charges sont interconnectés entre eux.

Cela permet aussi de n'embarquer que les informations qui sont nécessaires pour le micro-réseau, et ainsi de ne pas être obligé d'inclure des données et des fonctionnalités relatives à des appareils qui ne sont pas présents dans le micro-réseau, comme ce serait le cas si des paramétrages et des algorithmes génériques et non personnalisés venaient à être déployés sur le micro-réseau 2.

En variante, si plusieurs scénarios d'utilisation (ou cas d'usage) ont été définis par l'opérateur lors de l'étape S100, alors des fonctions, mais aussi des paramètres et des réglages différents pourraient être définis lors de l'étape S102 pour chacun de ces cas d'usage.

Par exemple, les fonctionnalités implémentées par les algorithmes générés peuvent comporter :
- assurer la stabilité du micro-réseau (en fréquence et en tension), notamment lorsque le micro-réseau fonctionne en mode isolé (par exemple, en envoyant des consignes de puissance électrique active et réactive pour chaque charge ou source électrique, ces consignes étant pouvant être calculées en fonction de paramètres de fonctionnement des équipements, tels que le régime de fonctionnement de machines tournantes) ;
- gérer automatiquement les séquences d'opérations à mettre en œuvre pour passer du mode isolé vers le mode connecté (pouvant comporter, par exemple, le délestage de charges électriques, l'activation ou la désactivation sélective de dispositifs de stockage, le pilotage d'appareils de commutation pour assurer la reconnexion au réseau principal) avec ou sans perte de tension ;
- établir un protocole de communication entre le système de commande et les sources d'énergie locales, via la liaison 24.

On comprend que ces fonctionnalités sont données à titre d'exemple et qu'en variante, d'autres fonctions pourraient être implémentées, et notamment des fonctionnalités liées à la gestion des sources d'énergie 12 à 16 et, éventuellement, des charges électriques réversibles 6.

Par exemple, des fonctions relatives à la protection électrique peuvent permettre de définir au moins une valeur de seuil de déclenchement est automatiquement définie pour chaque appareil de protection, en fonction de la nature des charges et des sources électriques présentes dans le micro-réseau 2, mais aussi en fonction de la façon dont elles sont interconnectées, et de l'emplacement dudit appareil de protection dans le micro-réseau, ces informations ayant été obtenues lors de l'étape S100.

On peut aussi définir des paramètres de sélectivité pour les appareils de protection lorsque plusieurs appareils de protection sont connectés en cascade dans le micro-réseau 2.

Ensuite, au bloc S104, le procédé comporte une étape s'installation dans le contrôleur 18 des fonctions générées. Par exemple, l'ensemble de fonctions générées est transmis automatiquement depuis le terminal 26 vers le contrôleur 18, au moyen d'une liaison de communication. Le contrôleur 18 reçoit automatiquement les algorithmes générés et les installe automatiquement, par exemple dans une mémoire informatique.

En variante, l'étape S104 peut comporter l'envoi au contrôleur 18 d'informations techniques permettant au contrôleur 18 de piloter automatiquement le fonctionnement des appareils connectés, tels que des réglages et des paramètres de fonctionnement de différents appareils (notamment des appareils de protection tels que les disjoncteurs) du micro-réseau 2, ces données pouvant faire partie de celles acquises lors de l'étape S100.

Lors du fonctionnement du micro-réseau 2, les fonctions définies dans l'ensemble 50 sont chargés et utilisés par le contrôleur 18, notamment en fonction du cas d'usage choisi ou nécessité par les circonstances.

Par exemple, un cas d'usage peut être automatiquement sélectionné parmi plusieurs cas d'usage prédéfinis possibles, en fonction de conditions de fonctionnement du micro-réseau ou en fonction de paramètres extérieurs (tels que, par exemple, la charge ou l'état du réseau 10, l'heure de la journée, des conditions environnementales affectant la disponibilité d'une ou de plusieurs sources d'énergie, etc.), ces paramètres extérieurs pouvant de préférence être mesurés ou acquis automatiquement par le contrôleur 18.

Ensuite, au bloc S106, le procédé peut optionnellement comporter une étape de génération automatique d'un deuxième ensemble d'algorithmes qui permettent d'optimiser la consommation du micro-réseau 2 lorsque le micro-réseau est connecté au réseau 10.

Par exemple, ces algorithmes peuvent implémenter des fonctionnalités telles que :
- gérer la consommation et/ou la production d'électricité du micro-réseau en fonction de la politique tarifaire appliquée par un gestionnaire du réseau principal 10, notamment lorsque le coût de l'électricité fournie par le réseau 10 varie au cours du temps (par exemple, réduire la consommation et/ou augmenter la production d'électricité locale lorsque les tarifs augmentent) ;
- gérer la consommation électrique et/ou la production électrique locale en période de pointe (« peak shaving » en anglais) ;
- interdire l'export d'énergie électrique vers le réseau principal 10 ;
- favoriser l'autoconsommation de l'électricité produite (par exemple en favorisant la consommation et/ou le stockage de l'électricité produite par des panneaux photovoltaïques, lorsqu'ils sont présents dans le micro-réseau 2).

Là encore, ces algorithmes sont, de préférence, générés sous forme d'instructions exécutables ou de code logiciel compilé. Ces algorithmes peuvent être sélectionnés parmi des bases de données préexistantes.

Sur le schéma synoptique de la figure 3, un module 52 de génération d'algorithmes construit automatiquement le deuxième ensemble d'algorithmes 54 à partir des données techniques reçues lors de l'étape S100. Par exemple, le module 52 de génération d'algorithmes est implémenté par du code logiciel exécuté par le terminal 26 ou par le serveur 30. Ces algorithmes peuvent ensuite être exécutés par le serveur 30 ou par le terminal 20 pendant le fonctionnement du micro-réseau 2.

Ensuite, au bloc S108, le procédé peut optionnellement comporter une étape de création automatique d'une interface homme machine à partir des données techniques acquises, cette étape comportant notamment la génération d'une représentation graphique schématisée du micro-réseau 2.

Sur le schéma synoptique de la figure 3, un module 56 de génération d'interface graphique construit automatiquement une interface graphique 58 à partir des données techniques contenues dans la base de données reçue.

Par exemple, le module 56 de génération d'interface graphique est implémenté par du code logiciel exécuté par le terminal 26 ou par le serveur 30 (les données relatives à la présentation de l'interface graphique étant alors transmises au terminal 26).

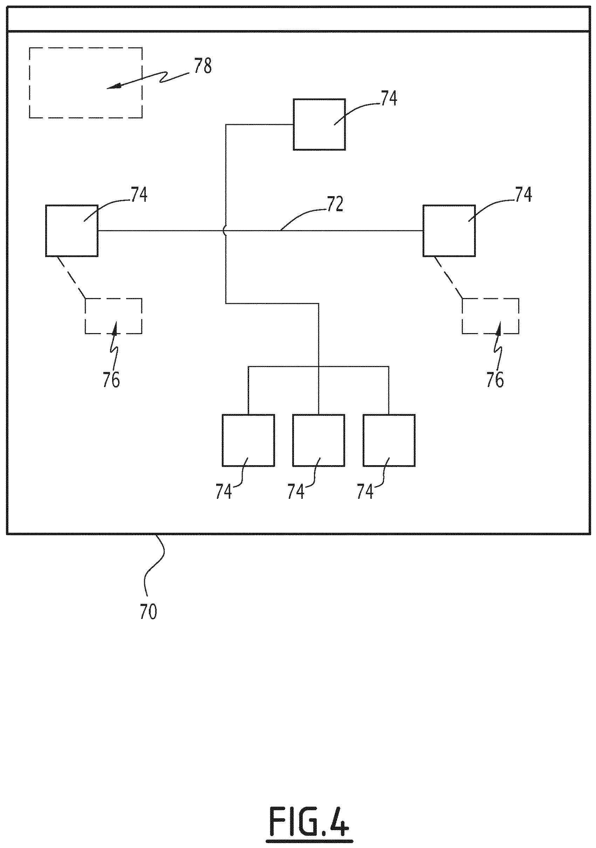

La figure 4 représente un exemple d'interface graphique générée automatiquement lors de l'étape S108.

En pratique, l'interface graphique 70 est destinée à être affichée sur un écran d'un terminal informatique, par exemple à l'intention d'un opérateur chargé de contrôler le bon fonctionnement du micro-réseau 2, que ce soit sur l'interface locale 22 ou à distance sur une interface web générée par le terminal 20 po par le serveur 30 (à partir d'informations issues du système de commande du micro-réseau 2).

L'interface graphique 70 comporte plusieurs symboles graphiques disposés sur un fond, ces symboles étant choisis et agencés spatialement les uns par rapport aux autres en fonction des données saisies, par exemple en fonction de la topologie du micro-réseau 2 mais aussi en fonction des caractéristiques des équipements du micro-réseau 2 renseignés dans la base de données 50.

Dans l'exemple illustré, l'interface 70 comporte des tracés 72 symbolisant les interconnexions électriques dans le micro-réseau 2, et des icônes 74 représentant tout ou partie des équipements du micro-réseau 2.

Les icônes 74 sont raccordées par des portions de tracés 72, selon un agencement représentatif de la manière dont les appareils électriques correspondants sont raccordés dans le micro-réseau 2.

Par exemple, les icônes 74 sont choisies parmi une liste prédéfinie ou une bibliothèque de symboles graphiques, chaque icône étant associée à un type d'équipement (charge, source, appareil de commutation, appareil de protection, etc.) représentatif de la nature de cet équipement.

Des zones d'affichage 76, 78 placées à divers emplacements de l'interface 70 sont prévues pour afficher des données représentatives de l'état de fonctionnement d'appareils du micro-réseau 2, et/ou du micro-réseau 2 lui-même. Ces données peuvent être affichées sous forme numérique, alphanumérique, sous forme de symboles ou de pictogrammes, ou selon toute combinaison ou présentation appropriée.

Par exemple, des premières zones d'affichage 76 peuvent être associées à des icônes 74 pour afficher plus spécifiquement des données relatives à un équipement du micro-réseau 2. Une ou plusieurs deuxièmes zones d'affichage 78 peuvent afficher plus spécifiquement des données relatives à l'ensemble du micro-réseau 2, sans pour autant être associée à un équipement en particulier.

Bien que cela ne soit pas illustré sur la figure 4, des zones d'affichage peuvent aussi être associées aux tracés 72, par exemple pour afficher des informations relatives à l'état d'un conducteur électrique ou des informations relatives aux courants électriques transitant sur ce conducteur électrique.

On comprend donc que seuls les éléments nécessaires réellement présents dans le réseau sont affichés.

Cet exemple d'interface graphique 70 n'est évidemment pas limitatif et pourrait être présenté différemment, en fonction de la nature du micro-réseau 2 et des choix de présentation retenus par l'installateur.

De retour à la figure 2, au bloc S110, le procédé peut optionnellement comporter une étape de configuration automatique des liaisons de communication 24.

Sur le schéma synoptique de la figure 3, un module 56 de configuration définit automatiquement des réglages et des données de configuration à partir des données techniques contenues dans la base de données reçue. Par exemple, le module 56 de configuration est implémenté par du code logiciel exécuté par le contrôleur 18 et/ou par le terminal 20.

Ces réglages et ces paramètres sont ensuite appliqués sur les différentes interfaces de communication raccordées à la liaison 24.

De façon générale, les réglages et paramètres générés permettent de configurer la liaison 24 pour autoriser une communication entre le système de commande du micro-réseau 2 (notamment, le contrôleur 18 et le terminal 20) avec les charges électriques flexibles 6 et avec les sources électriques pilotables (voire, le cas échéant, avec les appareils de commutation assurant l'interconnexion du micro-réseau 2 avec le réseau principal 10).

L'étape S110 de configuration peut comporter, de façon non limitative, des opérations consistant à définir automatiquement, en fonction des données acquises lors de l'étape S100 :
- les adresses des équipements connectés, notamment des adresses réseau ;
- les paramètres de communication entre les (par exemple en fonction de la nature et/ou de la topologie de la liaison 24 et/ou des protocoles de communication utilisés) ;
- les droits d'accès (lecture et/ou écriture) à chacun des équipements connectés.

Il va de soi qu'en variante, les multiples étapes décrites ci-dessus pourraient être exécutées dans un ordre différent. Certaines étapes pourraient être omises. L'exemple décrit ne fait pas obstacle à ce que, dans d'autres modes de réalisation, d'autres étapes soient mises en œuvre conjointement et/ou séquentiellement avec les étapes décrites.

Grâce à l'invention, un micro-réseau de distribution d'électricité peut être configuré rapidement, simplement et de façon automatisée.

Les modes de réalisation des procédés et des systèmes décrits ci-dessus permettent de programmer tout ou partie des fonctionnalités des systèmes de commande chargés de piloter et de superviser le micro-réseau 2 automatiquement et sur mesure afin de tenir compte des spécificités du micro-réseau 2.

Notamment, les réglages les plus délicats, tels que le réglage des paramètres des appareils de protection, la définition des plans de protection spécifiques, et l'adaptation des fonctions de supervision et de pilotage implémentées par le contrôleur 18 à la topologie spécifique du micro-réseau 2 sont automatisées et peuvent se dérouler sans nécessiter systématiquement l'intervention sur site d'un installateur spécialisé.

Les modes de réalisation et les variantes envisagés ci-dessus peuvent être combinés entre eux pour donner naissance à de nouveaux modes de réalisation.

## Revendications

1. Procédé de configuration automatique d'un micro-réseau de distribution d'électricité (2), ce procédé comportant :
- acquérir (S100) de données techniques décrivant des propriétés du micro-réseau, notamment une topologie du micro-réseau et des propriétés d'au moins une partie des équipements électriques connectés au micro-réseau, au moyen d'un outil logiciel de configuration implémenté par un serveur informatique distant (30) ;
- générer (S102) automatiquement un ensemble de fonctions logicielles exécutables permettant de piloter automatiquement les équipements du micro-réseau, en tenant compte des propriétés du micro-réseau acquises par l'outil de configuration ;
- installer (S104) automatiquement les fonctions logicielles générées sur un contrôleur (18) électronique appartenant à un système de commande du micro-réseau, ce contrôleur étant connecté auxdits équipements par l'intermédiaire d'une liaison de communications (24).

2. Procédé selon la revendication 1, dans lequel les fonctions logicielles générées sont configurées pour, lorsqu'exécutées par le contrôleur (18), assurer la stabilité du micro-réseau en fréquence et en tension, notamment lorsque le micro-réseau fonctionne en mode isolé.

3. Procédé selon l'une quelconque des revendications précédentes, dans lequel les fonctions logicielles générées sont configurées pour, lorsqu'exécutées par le contrôleur (18), piloter des appareils de protection électrique installés dans le micro-réseau.

4. Procédé selon l'une quelconque des revendications précédentes, dans lequel les fonctions logicielles générées sont configurées pour, lorsqu'exécutées par le contrôleur (18), gérer automatiquement les séquences d'opérations à mettre en œuvre pour passer d'un mode isolé, dans lequel le micro-réseau est déconnecté d'un réseau (10) de distribution d'électricité, et un mode connecté, dans lequel le micro-réseau est connecté à un réseau (10) de distribution d'électricité.

5. Procédé selon l'une quelconque des revendications précédentes, dans lequel le procédé comporte en outre une étape de génération automatique (S106) d'un deuxième ensemble d'algorithmes qui permettent d'optimiser la consommation du micro-réseau lorsque le micro-réseau est connecté à un réseau (10) de distribution d'électricité.

6. Procédé selon l'une quelconque des revendications précédentes, dans lequel le procédé comporte en outre une étape de création automatique (S108) d'une interface homme machine à partir des données acquises.

7. Procédé selon l'une quelconque des revendications précédentes, dans lequel le procédé comporte en outre une génération automatique de paramètres de configuration de la liaison de communication (24) à partir des données acquises.

8. Procédé selon l'une quelconque des revendications précédentes, dans lequel les équipements électriques connectés au micro-réseau comportent un ou plusieurs charges électriques réversibles (6), et/ou un ou plusieurs dispositifs de stockage d'énergie (14) et/ou un ou plusieurs dispositifs de production d'énergie renouvelable (16).

9. Procédé selon l'une quelconque des revendications précédentes, dans lequel le contrôleur électronique (18) est un automate industriel programmable ou un ordinateur personnel industriel.

10. Système de configuration automatique d'un micro-réseau de distribution d'électricité, comportant :
- un outil logiciel de configuration implémenté par un serveur informatique (30) distant ;
- un système de commande d'un micro-réseau, comportant un contrôleur électronique (18) connecté à des équipements électriques du micro-réseau par l'intermédiaire d'une liaison de communications (24) ;
et dans lequel le système de configuration est programmé pour :
- acquérir (S100) de données techniques décrivant des propriétés du micro-réseau, notamment une topologie du micro-réseau et des propriétés d'au moins une partie des équipements électriques connectés au micro-réseau, au moyen de l'outil de configuration ;
- générer (S102) automatiquement un ensemble de fonctions logicielles exécutables permettant de piloter automatiquement les équipements du micro-réseau, en tenant compte des propriétés du micro-réseau acquises par l'outil de configuration ;
- installer (S104) automatiquement les fonctions logicielles générées sur le contrôleur (18) électronique.

## Revendications modifiées

### Revendications modifiées conformément à la règle 137(2) CBE.

1. Procédé de configuration automatique d'un micro-réseau de distribution d'électricité (2), le micro-réseau de distribution d'électricité (2) comportant des conducteurs électriques (4) qui permettent de connecter des charges électriques (6, 8) et des sources d'électricité locales, ce procédé comportant :
- acquérir (S100) de données techniques décrivant des propriétés du micro-réseau, et des propriétés d'au moins une partie des équipements électriques connectés au micro-réseau, au moyen d'un outil logiciel de configuration implémenté par un serveur informatique distant (30), les propriétés du micro-réseau prises en compte comportant la topologie du micro-réseau ;
- générer (S102) automatiquement un ensemble de fonctions logicielles exécutables permettant de piloter automatiquement les équipements du micro-réseau, en tenant compte des propriétés du micro-réseau acquises par l'outil de configuration, l'une des fonctions logicielles ainsi générées étant programmée pour assurer la stabilité du micro-réseau en fréquence et en tension, notamment lorsque le micro-réseau fonctionne en mode isolé d'un réseau de distribution électrique ;
- installer (S104) automatiquement les fonctions logicielles générées sur un contrôleur (18) électronique appartenant à un système de commande du micro-réseau, ce contrôleur étant connecté auxdits équipements par l'intermédiaire d'une liaison de communications (24).

2. Procédé selon la revendication 1, dans lequel les fonctions logicielles générées sont configurées pour, lorsqu'exécutées par le contrôleur (18), assurer la stabilité du micro-réseau en fréquence et en tension, notamment lorsque le micro-réseau fonctionne en mode isolé.

3. Procédé selon l'une quelconque des revendications précédentes, dans lequel les fonctions logicielles générées sont configurées pour, lorsqu'exécutées par le contrôleur (18), piloter des appareils de protection électrique installés dans le micro-réseau.

4. Procédé selon l'une quelconque des revendications précédentes, dans lequel les fonctions logicielles générées sont configurées pour, lorsqu'exécutées par le contrôleur (18), gérer automatiquement les séquences d'opérations à mettre en œuvre pour passer d'un mode isolé, dans lequel le micro-réseau est déconnecté d'un réseau (10) de distribution d'électricité, et un mode connecté, dans lequel le micro-réseau est connecté à un réseau (10) de distribution d'électricité.

5. Procédé selon l'une quelconque des revendications précédentes, dans lequel le procédé comporte en outre une étape de génération automatique (S106) d'un deuxième ensemble d'algorithmes qui permettent d'optimiser la consommation du micro-réseau lorsque le micro-réseau est connecté à un réseau (10) de distribution d'électricité.

6. Procédé selon l'une quelconque des revendications précédentes, dans lequel le procédé comporte en outre une étape de création automatique (S108) d'une interface homme machine à partir des données acquises.

7. Procédé selon l'une quelconque des revendications précédentes, dans lequel le procédé comporte en outre une génération automatique de paramètres de configuration de la liaison de communication (24) à partir des données acquises.

8. Procédé selon l'une quelconque des revendications précédentes, dans lequel les équipements électriques connectés au micro-réseau comportent un ou plusieurs charges électriques réversibles (6), et/ou un ou plusieurs dispositifs de stockage d'énergie (14) et/ou un ou plusieurs dispositifs de production d'énergie renouvelable (16).

9. Procédé selon l'une quelconque des revendications précédentes, dans lequel le contrôleur électronique (18) est un automate industriel programmable ou un ordinateur personnel industriel.

10. Système de configuration automatique d'un micro-réseau de distribution d'électricité, le micro-réseau de distribution d'électricité (2) comportant des conducteurs électriques (4) qui permettent de connecter des charges électriques (6, 8) et des sources d'électricité locales, le système comportant :
- un outil logiciel de configuration implémenté par un serveur informatique (30) distant ;
- un système de commande d'un micro-réseau, comportant un contrôleur électronique (18) connecté à des équipements électriques du micro-réseau par l'intermédiaire d'une liaison de communications (24) ;
et dans lequel le système de configuration est programmé pour :
- acquérir (S100) de données techniques décrivant des propriétés du micro-réseau, et des propriétés d'au moins une partie des équipements électriques connectés au micro-réseau, au moyen de l'outil de configuration les propriétés du micro-réseau prises en compte comportant la topologie du micro-réseau ;
- générer (S102) automatiquement un ensemble de fonctions logicielles exécutables permettant de piloter automatiquement les équipements du micro-réseau, en tenant compte des propriétés du micro-réseau acquises par l'outil de configuration, l'une des fonctions logicielles ainsi générées étant programmée pour assurer la stabilité du micro-réseau en fréquence et en tension, notamment lorsque le micro-réseau fonctionne en mode isolé d'un réseau de distribution électrique ;
- installer (S104) automatiquement les fonctions logicielles générées sur le contrôleur (18) électronique.
